# EUROPÄISCHE PATENTSCHRIFT

(11) **EP 1 012 607 B1**
(45) Veröffentlichungstag und Bekanntmachung des Hinweises auf die Patenterteilung: **05.11.2003**
(21) Anmeldenummer: 98949936.3
(22) Anmeldetag: 25.08.1998
(51) Int. Cl.: G01P 21/00, B60R 21/00, G01R 31/28

(54) **SENSORVORRICHTUNG**
SENSOR DEVICE
DISPOSITIF CAPTEUR

(30) Priorität: 11.09.1997 DE 19739903
(43) Veröffentlichungstag der Anmeldung: 28.06.2000
(73) Patentinhaber: ROBERT BOSCH GMBH, 70442 Stuttgart (DE)
(72) Erfinder: ARTZNER, Johannes, D-72764 Reutlingen (DE); BAUER, Wolfram, D-72074 Tübingen (DE)
(86) Internationale Anmeldenummer: DE9802484
(87) Internationale Veröffentlichungsnummer: WO99013345

(56) Entgegenhaltungen:
- WO-A-88/01242
- DE-A- 3 809 299
- DE-A- 4 443 941

## Beschreibung

### Stand der Technik

Die Erfindung geht aus von einer Sensorvorrichtung nach der Gattung des Hauptanspruchs. Es ist schon eine Sensorvorrichtung mit einer Testeinrichtung bekannt, die die Sensorvorrichtung auf eine eventuelle Fehlfunktion überprüft
(DE 44 47 005). Diese Testeinrichtung muß extern durch Betätigung eines Testeinganges aktiviert werden. Dabei wird in der Testphase der Sensor über ein Störsignal verstimmt, wobei das Störsignal einem bestimmten Wert einer zu messenden Meßgröße entspricht.

### Vorteile der Erfindung

Die erfindungsgemäße Vorrichtung mit den Merkmalen des Hauptanspruchs hat demgegenüber den Vorteil, daß sie einen eigensicheren Sensor darstellt, der, ohne den Sensor zu verstimmen und damit die Meßfunktion zu beeinflussen, ständig einen Selbsttest durchführt und so Störungen in der Mechanik und/oder Elektronik erkennt. Dabei ist keine externe Triggerung und keine externe zusätzliche Beschaltung erforderlich; es ist ein Drei-Pin-Anschluß (Spannungsversorgung + Signalausgang) realisierbar. Dadurch ist auch eine Abwärtskompatibilität zu bereits bestehenden Sensoren ohne Selbsttesteinrichtung gegeben, die einen solchen Anschluß aufweisen und durch die erfindungsgemäße Vorrichtung in vorteilhafter Weise ersetzt werden können.

Vorteilhafte Weiterbildungen und Verbesserungen der im Hauptanspruch angegebenen Vorrichtung ergeben sich durch die in den abhängigen Ansprüchen genannten Merkmale.

### Zeichnung

Ausführungsbeispiele der Erfindung sind in der Zeichnung dargestellt und in der nachfolgenden Beschreibung näher erläutert. Es zeigen:
Figur 1 ein erstes Ausführungsbeispiel,
Figur 2 die Frequenzverhältnisse im ersten Ausführungsbeispiel,
Figur 3 ein zweites Ausführungsbeispiel und
Figur 4 die Frequenzverhältnisse im zweiten Ausführungsbeispiel.

### Beschreibung der Ausführungsbeispiele

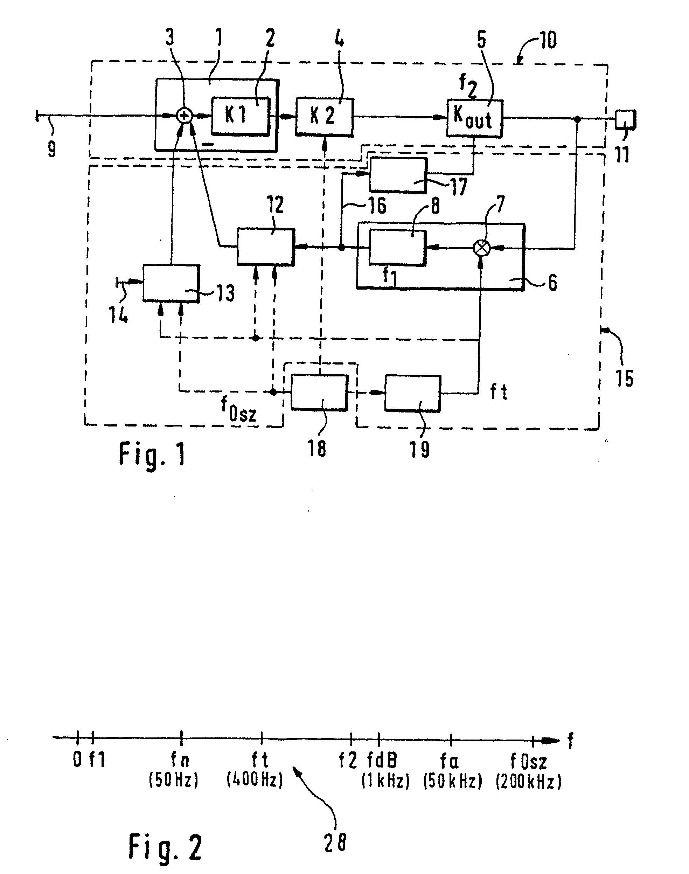

Figur 1 zeigt eine Meß- und Auswerteeinheit 10 mit einem Meßeingang 9 und einem Ausgang 11. Eine Selbsttesteinrichtung 15 steht mit der Meß- und Auswerteeinheit 10 in elektrischer Verbindung. Die Meß- und Auswerteeinheit 10 weist ein Meßelement 1 auf, das mit dem Eingang 9 über einen Summationspunkt 3 in Verbindung steht. Das Meßelement 1 weist eine Sensorübertragungsfunktion 2 auf, die den Wert K1 besitzt. Der Ausgang des Meßelements ist mit einer Auswerteschaltung 4 mit einer Auswerteübertragungsfunktion K2 verbunden. Der Ausgang der Auswerteschaltung 4 wiederum ist elektrisch mit einem Verstärker 5 verbunden, der die Verstärkung Kₒᵤₜ und eine obere Grenzfrequenz f2 aufweist. Der Ausgang des Verstärkers 5 ist mit dem Ausgang 11 verbunden. Die Selbsttesteinrichtung 15 weist ein als Synchrondemodulator 6 ausgestaltetes frequenzselektives Nachweismittel auf, das mit dem Ausgang 11 verbunden ist. Der synchrone Demodulator 6 weist einen Demodulator 7 und einen I-Regler 8 auf, wobei der I-Regler eine obere Grenzfrequenz f1 hat. Ferner ist ein Oszillator 18 vorgesehen, der über einen Frequenzuntersetzer 19 ein Signal mit einer Testfrequenz ft in den Demodulator einspeist. Der Demodulator 7 liefert sein Ausgangssignal an den I-Regler 8, der wiederum über eine Gegensignalleitung 16 mit einer einen Fensterkomparator aufweisenden Abschaltlogikschaltung 17 elektrisch verbunden ist. Die Abschaltlogikschaltung 17 wiederum steht mit dem Verstärker 5 der Meß- und Auswerteeinheit 10 in elektrischer Verbindung. Der Ausgang des Synchrondemodulators ist neben der Abschaltlogikschaltung 17 mit einem elektrostatischen Spannungs-Kraft-Wandler 12 verbunden. Der Spannungskraftwandler 12 liefert ein Kompensationssignal an den Summationspunkt 3. Im Ausführungsbeispiel ist dabei das Meßelement beispielsweise ein Beschleunigungssensor, an dessen Eingang 9 die einer zu messenden Beschleunigung proportionale Trägheitskraft anliegt. Die Selbsttesteinrichtung 15 weist einen in Figur 1 nicht eingezeichneten Testamplitudengenerator auf, der eine Testamplitude 14 an einen elektrostatischen Testspannungs-Kraft-Wandler 13 weitergibt, der eine Testspannung in den Summationspunkt 3 einspeist. Die Signalfrequenz beziehen der Spannungskraftwandler 12 und der Testspannungskraftwandler 13 vom Frequenzuntersetzer 19. Der Oszillator 18 liefert ein Signal mit einer Oszillatorfrequenz fosz an die Auswerteschaltung 4, den Spannungskraftwandler 12 und an den Testspannungskraftwandler 13.

Das als kapazitiver Beschleunigungssensor ausgebildete Meßelement 1 erfaßt über eine Ablenkung eines beweglichen Elements des Meßelements eine einer Beschleunigung proportionalen Trägheitskraft. Das Einwirken der Trägkeitskraft auf das Meßelement 1 ist dabei durch den Eingang 9 in Figur 1 dargestellt. Der Wert K1 der Sensorübertragungsfunktion ist der Quotient von Positionsänderung des beweglichen Elements und einwirkender Trägheitskraft. Die Positionsänderung des beweglichen Elements wird in der Auswerteschaltung 4 ausgewertet und in eine Spannungsänderung umgewandelt. Maß hierfür ist die Auswerteübertragungsfunktion K2, die proportional ist zur Auslenkung des beweglichen Elements. Das bewegliche Element ist dabei Teil zweier Kapazitäten, deren Kapazitätsänderung in Folge der Auslenkung des beweglichen Elements in der Auswerteschaltung in ein Spannungssignal umgewandelt wird. Die Auswertung erfolgt dabei in einer ersten Ausführungsform des ersten Ausführungsbeispiels in "Switched Capacitor"- Technik (SC-Technik) in einer "Sample and Hold" - Schaltung. Die Abtastfrequenz, mit der die Auswerteschaltung die Kapazitätsänderung "abfragt", ist dabei beispielsweise der vierte Bruchteil der Oszillatorfrequenz des Oszillators 18. Das Spannungssignal der Auswerteschaltung 4 wird in einem nachfolgenden Verstärker 5 mit der Verstärkung Kₒᵤₜ verstärkt; das verstärkte Spannungssignal ist am Ausgang 11 abgreifbar. Die Oszillatorfrequenz beträgt beispielsweise 200 KHz, die Abtastfrequenz fa dementsprechend 50 KHz. Ein Frequenzstrahl mit den für die Vorrichtung gemäß Figur 1 relevanten Frequenzwerten ist in Figur 2 dargestellt. Die zu messenden Beschleunigungswerte bewegen sich dabei beispielsweise in einem Frequenzbereich von O bis 50Hz, wobei mit fn in Figur 2 die maximale Nutzfrequenz symbolisiert ist, also die maximale Frequenz solcher Änderungen der Beschleunigung im zeitlichen Verlauf, die mit dem Meßelement noch nachgewiesen werden sollen. Die Meß- und Auswerteeinheit 10 stellt eine offene Schleife dar, da zur Auswertung des zu messenden Beschleunigungssignals keine Rückkoppelung in der Abfolge von Meßelement über Auswerteschaltung zum Verstärker hin vorgesehen ist. Die obere Grenzfrequenz f2 des Verstärkers 5 muß dabei größer sein als die maximale Nutzfrequenz fn (siehe Figur 2, in der die Frequenzverhältnisse 28 in der offenen Schleifenanordnung dargestellt sind). f2 muß auch größer sein als eine Testfrequenz ft, die beispielsweise 400 Hz beträgt und somit wiederum größer ist als die maximale Nutzfrequenz fn. Die 3 dB-Eckfrequenz des Meßelements liegt dabei beispielsweise über der oberen Grenzfrequenz des Verstärkers 5 (siehe Figur 2, wo für die 3 dB-Eckfrequenz fdB als Beispiel ein Wert von 1 KHz angegeben ist, der rechts von der oberen Grenzfrequenz f2 eingetragen ist). Die Testfrequenz ft ist hierbei die Frequenz des Testsignales, das mit dem elektrostatischen Testspannungskraftwandler 13 der Meßgröße überlagert wird. Der Testamplitudengenerator liefert eine Testamplitude, die der Testspannungskraftwandler dazu verwendet, ein Testspannungssignal mit der Testfrequenz, die größer ist als die maximale Nutzfrequenz, der Meßgröße zu überlagern, indem der Meßgröße, also der Trägkeitskraft, eine zusätzliche Kraft überlagert wird. Da die obere Grenzfrequenz f2 des Verstärkers 5 größer ist als die Testfrequenz, wird das in ein Spannungssignal umgewandeltes Testsignal vom Verstärker 5 durchgelassen und kann vom Synchrondemulator 6 nachgewiesen werden. Der Demodulator 7 demoduliert das Ausgangssignal des Verstärkers 5 frequenzselektiv bei der Testfrequenz ft. Der I-Regler wirkt als Tiefpaß mit einer Grenzfrequenz f1 Sein Ausgangssignal ist ein Spannungssignal das zur Ansteuerung des elektrostatischen Spannungskraftwandlers 12 dient. Dieser Spannungskraftwandler 12 überlagert der Meßgröße ein Kompensationssignal, um das -wie zuvor beschrieben- eingespeiste Testsignal zu kompensieren. Der Spannungskraftwandler 12 wie Testspannungskraftwandler 13 sind dabei als Schaltungsteile realisiert, die an vorgesehenen Elektroden des kapazitiven Beschleunigungssensors anliegen, um entsprechend der Spannungssignale eine geeignete Auslenkung bzw. Kompensationsauslenkung des beweglichen Elements des kapazitiven Beschleunigungssensors zu bewirken. Ist die Meß-und Auswerteeinheit 10 in Ordnung, so wird das Testssignal vollständig durch das Kompensationssignal kompensiert und am Ausgang des I-Reglers 8 liegt eine Gleichspannung an, die der Testamplitude 14 entspricht. Ist die Meß- und Auswerteeinheit 10 nicht in Ordnung, sei es, weil das mechanische Meßelement beschädigt ist oder weil die Elektronik nicht ordnungsgemäß funktioniert, so verstärkt sich am Ausgang 11 die Signalkomponente mit der Testfrequenz ft. Diese Verstärkung erfolgt über die durch den Synchrondemodulator 6 und den Spannungskraftwandler 12 gebildete Schleife, die eine Gegenkopplungsschleife für Testfrequenzsignalkomponenten zur offenen Schleife der Meß- und Auswerteeinheit 10 darstellt. Da der I-Regler 8 als Integrator wirkt, integriert er eine über eine längere Zeit anstehende Signalamplitude mit der Testfrequenz ft am Ausgang 11, am Ausgang des I-Reglers 8 liegt in diesem Falle also ein Extremwert (maximaler oder minimaler Spannungswert) an, der über die Gegensignalleitung 16 die Abschaltlogikschaltung ansteuert. Ein zur Abschaltlogikschaltung 17 gehöriger Fensterkomperator registriert, daß der Spannungswert der Gegensignalleitung nicht in einem gewissen Fenster liegt, was bedeutet, daß die Meß- und Auswerteeinheit 10 nicht ordnungsgemäß funktioniert. Dementsprechend schaltet die Abschaltlogikschaltung 17 den Verstärker 5 ab oder belegt über die elektrische Verbindung zwischen Abschaltlogikschaltung 17 und Verstärker 5 den Ausgang 11 der Meß- und Auswerteeinheit 10 mit einem fest definierten Spannungswert der von externer Elektronik, die am Ausgang 11 angeschlossen ist, als Fehlersignal erkannt wird. Funktioniert die Meß- und Auswerteeinheit 10 ordnungsgemäß, so liegt am Ausgang des I-Reglers ein Spannungswert an, der der vom Testamplitudengenerator erzeugten Testamplitude 14 entspricht. Dementsprechend ist der Fensterkomperator der Abschaltlogikschaltung 17 so ausgestaltet, daß er eine Fehlfunktion der Meß-und Auswerteeinheit 10 erkennt, sobald der am Ausgang des I-Reglers anliegende Spannungswert nicht innerhalb eines Wertebereichs um die Testamplitude 14 herum liegt, die durch den Fensterkomperator definiert ist. Die Grenzfrequenz f1 des I-Reglers 8, auch Robustheitsfrequenz genannt, definiert die Robustheit des durch die offene Schleife der Meß- und Auswerteeinheit 10 und die Rückkopplungsschleife gebildeten Selbsttestregelkreises hinsichtlich bei der Testfrequenz ft auftretenden Nutzsignale. Denn der I-Regler 8 läßt in integrativer Weise lediglich Spannungsanteile durch, die mit der Testfrequenz am Ausgang 11 auftreten. Die Grenzfrequenz f1 ist dabei möglichst klein, um ein Aufintegrieren von Beschleunigungskraftsignalkomponenten mit der Testfrequenz auszuschließen. Bei gegebener kleiner Grenzfrequenz f1 (O < f1 < fn) ist dann ein solches Aufintegrieren ausgeschlossen, da die üblicherweise zu messenden Beschleunigungskräfte innerhalb des durch die maximale Nutzfrequenz fn gegebenen Nutzbandes liegen und so in keinem Falle Beschleunigungskräfte mit 400Hz-Signalkomponenten am Meßelement lange genug anliegen und auch groß genug sind, um sich am Ausgang des I-Reglers 8 bemerkbar zu machen. Aus den obigen Ausführungen ergibt sich also, daß der durch die Selbsttesteinrichtung 15 durchgeführte Selbsttest dem Originalbetrieb, der durch die durch die offene Schleife der Meß- und Auswerteeinheit durchgeführte Meßwertaufnahme definiert ist, überlagert ist und auf die Meßwertaufnahme keine Auswirkung hat, da die Frequenzkomponenten der zu messenden Größe im interessierenden Frequenzbereich, der durch die maximale Nutzfrequenz fn gegeben ist, unterhalb der Testfrequenz ft liegen und das Testsignal durch den Selbsttestregelkreis kompensiert wird. Es handelt sich also um eine frequenzselektive Überwachungsmethode ohne Beeinflussung der Funktion der Meß-und Auswerteeinheit und ohne externe Triggerung. Am Sensorausgang 11 liegt bis auf eine sehr kleine Regelabweichung kein Testsignal mehr an, d.h. nach außen hin ist der Selbsttest nicht sichtbar. Lediglich im Falle einer Fehlfunktion wird der Ausgang 11 mit einem definierten Spannungspegel belegt. Die Auswertung der Kapazitätsänderung durch die Auswerteschaltung und das Aufbringen von elektrostatischen Kräften über den Spannungs-bzw. Testspannungskraftwandler 12 bzw. 13 erfolgt im Zeitmultiplexverfahren, d.h. es wird die Tatsache ausgenutzt, daß das mechanische Meßelement träge ist im Vergleich zur Zeitperiode, die der Abtastfrequenz entspricht. Bedingung für das Zeitmultiplexverfahren ist, daß die Abtastfrequenz fa, die beispielsweise den vierten Bruchteil, also 50 KHz, der Oszillatorfrequenz fosz beträgt, groß ist im Vergleich zur 3 dB-Eckfrequenz des Meßelements. Die 3 dB-Eckfrequenz des Meßelements legt dabei den Frequenzbereich von Signalkomponenten fest, die zuverlässig gemessen werden können (im Ausführungsbeispiel also beispielsweise Beschleunigungskraftkomponenten mit Frequenzen bis zu 1 KHz). Der Oszillator 18 , der über einen Frequenzuntersetzer 19 ein Signal mit der Testfrequenz liefert, das im Demodulator 7 zur Demodulation und in den Spannungs-bzw. Testspannungkraftwandlern zur Erzeugung eines Test- bzw. Kompensationssignals verwendet wird, triggert überdies die Auswerteschaltung 4 sowie die Spannungskraftwandler 12 und 13 an. In einem ersten Zeitpunkt wird der Testspannungskraftwandler 13 angetriggert, in einem zweiten Zeitpunkt die Auswerteschaltung 4 und in einem dritten Schritt das Anlegen eines Kompensationssignals durch den Spannungskraftwandler 12. Die Meßwertabfrage, also das Ansteuern der Auswerteschaltung 4 durch den Oszillator 18, erfolgt mit der genannten Abtastfrequenz, also beispielsweise 50 KHz. Dadurch, daß die Abtastfrequenz groß ist im Vergleich zur 3dB-Eckfrequenz des Meßelements, kann die reguläre Meßwertaufnahme unmittelbar nach Anlegen eines Testsignales erfolgen, "obwohl" der Verstärker 5 Signalkomponenten mit der Testfrequenz nicht herausfiltert, denn das Meßelement ist zu träge, um im Takt der Abtastfrequenz auf ein angelegtes Testsignal zu reagieren. Erst über viele Perioden der Abtastfrequenz hinweg zeigt sich am Ausgang 11 ein eventuell eingetretener annomaler Betriebszustand, also eine wesentlich von Null verschiedene Signalkomponente mit der Testfrequenz. Alternativ zum Zeitmultiplexauswerteverfahren ist auch ein trägerfrequentes Auswerteverfahren einsetzbar. In diesem Falle entfällt in der Figur 1 die Verbindung zwischen dem Oszillator 18 und den Testspannungs- bzw. Spannungskraftwandlern 13 bzw. 12. Die Verbindung zwischen Oszillator 18 und Auswertschaltung 4 bleibt bestehen, da in diesem Falle, also der zweiten Ausführungsform des ersten Ausführungsbeispiels der Oszillator für die Auswerteschaltung 4 die Trägerfrequenz liefert, auf die das Nutzsignal aufmoduliert wird (Amplitudenmodulation). In diesem Falle können Auswertung und Testsignal gleichzeitig erfolgen, "obwohl" die Testsignalapplikation und Meßwertabgriff durch den Testspannungswandler 13 bzw. die Auswerteschaltung 4 am selben Abgriff des beweglichen Elements des mechanischen Meßelements erfolgen, da in Folge der trägerfrequenten Auswertung Testsignalapplikationen und Auswertung sich nicht gegenseitig beeinflussen. Dabei ist zu beachten, daß in der Figur 1 der Summationspunkt schematisch die Überlagerung von physikalischer Meßgröße, Testsignal und Kompensationssignal darstellt. Schaltungstechnisch ist die Testsignal- sowie die Kompensationssignalapplikation und Auswertung über die gleichen Anschlüsse an das mechanische Meßelement 1 realisiert.

Der Synchrondemodulator 6 kann durch einen Bandpaß mit nachgeschalteter Amplitudenauswertung ersetzt werden, wobei die Bandpaßfrequenz gleich der Testfrequenz ist.

In vorteilhafter Weise können Auswerteschaltung 4, Verstärker 5, Selbttesteinrichtung 15 und Oszillator 18 auf einem Chip integriert werden. Das Ausführungsbeispiel ist auch nicht auf Trägkeitskraft bzw. Beschleunigungsmessungen beschränkt, sondern allgemein auf zeitabhängige Meßgrößen anwendbar. Dementsprechend müssen die Wandler 12 bzw. 13 entsprechend ausgestaltet sein, um eine geeignete Spannungswandlung zu bewirken.

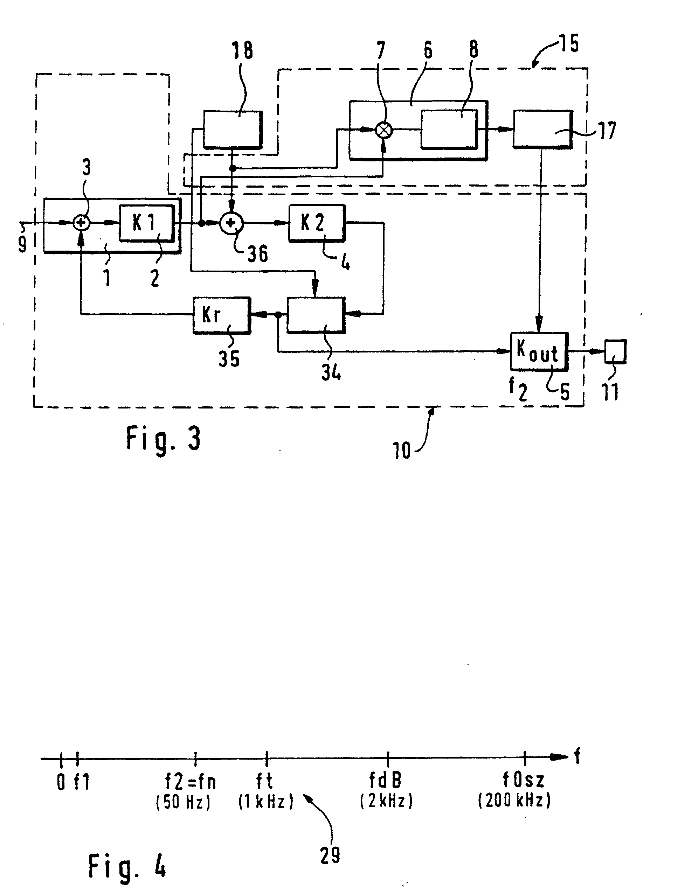

Figur 3 zeigt ein zweites Ausführungsbeispiel einer Meß- und Auswerteeinheit 10 mit einer entsprechend modifizierten Selbsttesteinrichtung 15. Die Meß- und Auswerteeinheit 10 stellt in diesem zweiten Ausführungsbeispiel dabei eine geschlossene Schleife dar, im Gegensatz zur offenen Schleife des ersten Ausführungsbeispiels nach Figur 1. Gleiche oder ähnliche Schaltungsteile sind mit gleichem Bezugszeichen versehen und werden nicht nochmals beschrieben. Die Auswerteschaltung 4 ist mit einem Pulsweitenmodulator 34 verbunden, der einen elektrostatischen Signalspannungs-Kraftwandler 35 (Signalwandlerfunktion Kr) ansteuert. Dieser Signalspannungkraftwandler wiederum übt am Summationspunkt 3 zeitgleich mit der externen Trägheitskraft eine Kraft auf das mechanische Meßelement 1 aus. Durch die geschlossene Schaltungsanordnung von mechanischem Meßelement 1, Auswerteschaltung 4, Pulsweitenmodulator 34 und Signalspannungskraftwandler 35 ist eine geschlossene Schleifenanordnung gegeben. Das der am Eingang anliegenden physikalischen Meßgröße, also bzw. der Trägkeitskraft proportionales Nutzsignal wird am Ausgang des Pulsweitenmodulators 34 abgegriffen und nach Verstärkung im Verstärker 5 am Ausgang 11 ausgegeben.

Bis auf eine kleine Regelabweichung bleibt das mechanische bewegliche Element eines als Beschleunigungssensor ausgebildeten Meßelements 1 immer in der gleichen Lage, die elektrische Größe zur Kompensation der Auslenkung des mechanischen Elements in Folge der einwirkenden Trägheitskraft ist dabei zugleich das elektrische Signal, das am Ausgang 11 abgegriffen werden kann und der Trägkeitskraft proportional ist. Der Pulsweitenmodulator steuert den Signalspannungs-Kraft-Wandler mit einem Signal mit der Frequenz des Oszillators 18 an, also beispielsweise 200 KHz. Die Pulsweite dieses Signals wird mit dem Ausgangssignal der Auswerteschaltung 4 variiert. Die Oszillatorfrequenz ist hierbei ebenfalls groß gegen alle übrigen charakteristischen Frequenzen der Anordnung nach Figur 3 (vgl. Figur 4, in der die Frequenzverhältnisse 29 in der geschlossenen Schleifenanordnung dargestellt sind). Im Vergleich zur Figur 1 ist im zweiten Ausführungsbeispiel nach Figur 3 ein weiterer Summationspunkt 36 vorgesehen, der zwischen dem Ausgang des Meßelements 1 und dem Eingang der Auswerteschaltung 4 angeordnet ist. Die Sensorübertragungsfunktion 2 hat in diesem Ausführungsbeispiel einen Wert K1, der dem Quotienten von resultierender Ausgangsspannung des Meßelements 1 und zugehöriger physikalischer Meßgröße, beispielsweise einer Beschleunigung, entspricht. Im Normalbetrieb, also wenn alle Schaltungsbestandteile in Ordnung sind, wird auch dieses Testsignal durch diese geschlossene Schleifenanordnung ausgeregelt, genauso wie das Nutzsignal, das im Gegensatz zum Testsignal, das eine Testfrequenz von beispielsweise 1 KHz aufweist, lediglich interessierende Frequenzen von O bis beispielsweise 50 Hz als maximale Nutzfrequenz fn aufweist (Figur 4). Am Ausgang 11 der Meß- und Auswerteeinheit 10 liegt nur eine Spannung an, die proportional ist zur zu messenden physikalischen Größe, da der den Ausgang 11 vorgeschaltete Verstärker 5 eine Grenzfrequenz f2 aufweist, die der maximalen Nutzfrequenz fn entspricht (Figur 4); d.h. am Ausgang des Pulsweitenmodulators anliegende Signalkomponenten mit der Testfrequenz ft werden herausgefiltert. Zwischen Meßelement 1 und Summationspunkt 36 greift der Demodulator 7 die am Ausgang des Meßelements anliegende Spannung ab. Im Normalbetrieb wird diese Spannung dem invertierten Testsignal völlig entsprechen, so daß am Ausgang des Summierers 36 kein Signal mit der Testfrequenz anliegt. Der synchrone Demodulator 6 steuert in diesem Falle die Abschaltlogikschaltung 17 nicht an, der Ausgang 11 ist freigeschaltet und liefert zur Meßgröße proportionale Spannungssignale. Wenn jedoch die Schleifenanordnung aufgetrennt ist oder das Meßelement mechanisch beschädigt ist oder ein sonstiger elektronischer Bestandteil der Meß-und Auswerteschaltung 10 funktionsuntüchtig ist, ist die Signalkomponente am Ausgang des mechanischen Meßelements 1 mit der Testfrequenz von der Testamplitude verschieden, der Synchrondemodulator weist dies über einen am Ausgang des Tiefpaß-Filters 8 anliegendes vom Testsignal verschiedenen Signal nach, und sofern dieser Wert außerhalb eines bestimmte Toleranzbereichs liegt, wird über die Abschaltlogikschaltung 17 der Verstärker 5 "abgeschaltet", indem der Ausgang 11 mit einem festen Spannungspegel belegt wird.

## Patentansprüche

1. Vorrichtung zur Ermittlung einer zeitabhängigen Meßgröße innerhalb eines Nutzbandes der Meßgröße mit einer Meßschaltung (10), die ein ein Meßsignal lieferndes Meßelement (1) und Auswertemittel (4, 5) zur Gewinnung einer die Meßgröße repräsentierenden Ausgangspannung aus dem Meßsignal aufweist, die an einem Ausgang (11) der Vorrichtung anliegt, wobei eine Selbsttesteinrichtung (15) vorgesehen ist, mit der der Meßgröße parallel zur laufenden Ermittlung der zeitabhängigen Meßgröße ein Testsignal mit einer Testfrequenz (ft) oberhalb des Nutzbandes überlagerbar ist, **dadurch gekennzeichnet, daß** die Selbsttesteinrichtung (15) ein frequenzselektives Nachweismittel (6) aüfweist, das die Reaktion der Meßschaltung auf das Testsignal am Ausgang (11) abgreift, daß die Selbsttesteinrichtung einen Spannungs-Kraft-Wandler (12) aufweist, der über den Ausgang des Nachweismittels (6) ansteuerbar ist, so daß der Meßgröße ein Signal zur Kompensation des Testsignals überlagerbar ist, wobei die Selbsttesteinrichtung eine von dem Ausgang des Nachweismittels ansteuerbare Abschaltlogikschaltung (17) mit einem Fensterkomparator aufweist, die detektiert, ob die Reaktion der Meßschaltung außerhalb eines Wertebereichs liegt, und die in einem solchen Fall den Ausgang (11) der Meßschaltung mit einem festen Spannungspegel belegt.

2. Vorrichtung nach Anspruch 1, **dadurch gekennzeichnet, daß** das Nachweismittel (6) einen Demodulator (7) und einen I-Regler (8) bzw. einen Tiefpaßfilter aufweist.

3. Vorrichtung nach Anspruch 1, **dadurch gekennzeichnet, daß** das Nachweismittel (6) einen Bandpaßfilter mit der Testfrequenz als Filterfrequenz und eine nachgeschaltete Amplitudenauswerteschaltung aufweist.

4. Vorrichtung nach einem der vorhergehenden Ansprüche, **dadurch gekennzeichnet, daß** ein Oszillator (18) mit einer Oszillatorfrequenz (fosz) vorgesehen ist, mit dem wahlweise über einen Frequenzuntersetzer (19) ein Signal mit der Testfrequenz (ft) erzeugbar ist.

5. Vorrichtung nach einem der vorhergehenden Ansprüche, **dadurch gekennzeichnet, daß** ein Eingang (9) der Meßschaltung, das Meßelement (1), die Auswertemittel (4, 5) und der Ausgang (11) eine offene Schleife bilden.

6. Vorrichtung nach einem der vorhergehenden Ansprüche, **dadurch gekennzeichnet, daß** die Auswertemittel (4, 5) eine Auswerteschaltung (4) und einen nachgeschalteten Verstärker (5) aufweisen, wobei die Auswerteschaltung eine mit der Meßgröße korrelierte Spannung erzeugt und der Verstärker eine Grenzfrequenz oberhalb der Testfrequenz aufweist.

7. Vorrichtung nach einem der vorhergehenden Ansprüche, **dadurch gekennzeichnet, daß** die Selbsttesteinrichtung (15) einen Testspannungs-Kraft-Wandler (13) aufweist, über den der Meßgröße das Testsignal überlagerbar ist, wobei die Amplitude des Testsignals durch eine von einem Testamplitudengenerator generierte Testamplitude (14) gegeben ist.

8. Vorrichtung nach Anspruch 4, **dadurch gekennzeichnet, daß** über den Oszillator (18) die Auswertemittel (4, 5), der Spannungs-Kraft-Wandler (12) und der Testspannungs-Kraft-Wandler (13) triggerbar sind, wobei eine Abtastrate (fa) des Auswertemittels größer als eine 3dB-Eckfrequenz des Meßelements ist und die Auswertemittel (4, 5) einerseits und die Spannungs- bzw. Testspannungs-Kraft-Wandler (12, 13) andererseits abwechselnd hintereinander triggerbar sind.

9. Vorrichtung nach einem der vorhergehenden Ansprüche und Anspruch 4, **dadurch gekennzeichnet, daß** die Auswertemittel (4, 5), Oszillator (18) und Selbsttesteinrichtung (15) auf einem Chip angeordnet sind.

## Claims

1. Apparatus for determining a time-dependent measurement variable within a useful band of the measurement variable by means of a measurement circuit (10) which has a measurement element (1) (which supplies a measurement signal) and evaluation means (4, 5) for obtaining an output voltage (which represents the measurement variable) from the measurement signal, with this output voltage being produced at an output (11) of the apparatus, and with a self-test device (15) being provided, by means of which a test signal at a test frequency (ft) above the useful band can be superimposed on the measurement variable in parallel with the continuous determination of the time-dependent measurement variable, **characterized in that** the self-test device (15) has a frequency-selective verification means (6) which taps off the reaction of the measurement circuit to the test signal at the output (11), **in that** the self-test device has a voltage/force transducer (12) which can be driven via the output of the verification means (6) so that a signal to compensate for the test signal can be superimposed on the measurement variable, with the self-test device having a switching-off logic circuit (17) which can be driven from the output of the verification means, has a window comparator and detects whether the reaction of the measurement circuit is outside a value range, and which in a situation such as this applies a fixed voltage level to the output (11) of the measurement circuit.

2. Apparatus according to Claim 1, **characterized in that** the verification means (6) have a demodulator (7) and an I regulator (8) or a low-pass filter.

3. Apparatus according to Claim 1, **characterized in that** the verification means (6) have a bandpass filter, whose filter frequency is the test frequency, and a downstream amplitude evaluation circuit.

4. Apparatus according to one of the preceding claims, **characterized in that** an oscillator (18) is provided, with an oscillator frequency (fosz), by means of which a signal at the test frequency (ft) can be produced selectively via a frequency divider (19).

5. Apparatus according to one of the preceding claims, **characterized in that** one input (9) of the measurement circuit, the measurement element (1), the evaluation means (4, 5) and the output (11) form an open loop.

6. Apparatus according to one of the preceding claims, **characterized in that** the evaluation means (4, 5) have an evaluation circuit (4) and a downstream amplifier (5), with the evaluation circuit producing a voltage which is correlated with the measurement variable, and the amplifier having a cut-off frequency above the test frequency.

7. Apparatus according to one of the preceding claims, **characterized in that** the self-test device (15) has a test voltage/force transducer (13), via which the test signal can be superimposed on the measurement variable, with the amplitude of the test signal being defined by a test amplitude (14) which is generated by a test amplitude generator.

8. Apparatus according to Claim 4, **characterized in that** the evaluation means (4, 5), the voltage/force transducer (12) and the test voltage/force transducer (13) can be triggered via the oscillator (18), with a sampling rate (fa) of the evaluation means being greater than the 3dB cut-off frequency of the measurement element, and in which case the evaluation means (4, 5) on the one hand and the voltage or test voltage/force transducer (12, 13) on the other hand can be triggered alternately and successively.

9. Apparatus according to one of the preceding claims and Claim 4, **characterized in that** the evaluation means (4, 5), the oscillator (18) and the self-test device (15) are arranged on one chip.

## Revendications

1. Dispositif pour déterminer une grandeur de mesure dépendant du temps dans une banque utile de la grandeur de mesure avec un circuit. de mesure (10), qui comprend un élément de mesure (1) fournissant un signal de mesure et un moyen d'exploitation (4. 5) pour donner une tension de sortie représentant la grandeur de mesure à partir du signal de mesure appliqué à la sortie (11) du dispositif,
une installation d'auto-contrôle (15) combinant un signal de contrôle d'une fréquence de contrôle (ft) supérieure à la bande utile à la grandeur de mesure, parallèlement à la détermination en cours de la grandeur de mesure dépendant du temps,
**caractérisé en ce que**
l'installation d'auto-contrôle (15) comporte un moyen de preuve (6) sélectif en fréquence, qui prend la réaction du circuit de mesure au signal de contrôle à la sortie (11),
l'installation d'auto-contrôle comporte un convertisseur tension/force (12) commandé par la sortie du moyen de preuve (16) de façon qu'un signal de compensation du signal de contrôle soit combiné à la grandeur de mesure,
l'installation d'auto-contrôle comporte un circuit logique de coupure (17) commandé par la sortie du moyen de preuve avec un comparateur à fenêtres qui détecte si la réaction du circuit de mesure se situe au-dessus d'une plage de valeurs et qui dans ce cas, occupe la sortie (11) du circuit de mesure avec un niveau de tension fixe.

2. Dispositif selon la revendication 1,
**caractérisé en ce que**
le moyen de preuve (6) comporte un démodulateur (7) et un régulateur-I (Intégral) (8) ou un filtre passe-bas.

3. Dispositif selon la revendication 1,
**caractérisé en ce que**
le moyen de preuve (6) comporte un filtre à bandes passantes avec comme fréquence de filtres la fréquence de contrôle et un circuit d'exploitation d'amplitude en aval.

4. Dispositif selon l'une des revendications précédentes.
**caractérisé par**
un oscillateur (18) ayant une fréquence d'oscillation (fosz) qui permet de générer sélectivement par un convertisseur de fréquence (19), un signal à la fréquence de contrôle (ft).

5. Dispositif selon l'une des revendications précédentes,
**caractérisé par**
une boucle ouverte formée par une entrée (9) du circuit de mesure, l'élément de mesure (1), les moyens d'exploitation (4, 5) et la sortie (11).

6. Dispositif selon l'une des revendications précédentes,
**caractérisé en ce que**
les moyens d'exploitation (4, 5) comportent un circuit d'exploitation (4) et un amplificateur (5) en aval, le circuit d'exploitation générant, une tension mise en corrélation avec la grandeur de mesure et l'amplificateur à une fréquence limite supérieure à la fréquence de contrôle.

7. Dispositif selon l'une des revendications précédentes,
**caractérisé en ce que**
l'installation d'auto-contrôle (15) comporte un convertisseur tension de contrôle/force (13) qui permet de combiner le signal de contrôle à la grandeur de mesures et l'amplitude du signal de contrôle donné par une amplitude de contrôle (14) générée par un générateur d'amplitude de contrôle.

8. Dispositif selon l'une la revendication 4,
**caractérisé en ce que**
l'oscillateur (18) déclenche les moyens d'exploitation (4, 5), le convertisseur tension/force (12) et le convertisseur tension de contrôle/force (13), un taux de détection (fl) du moyen d'exploitation étant supérieur à une fréquence de coupure 3 dB de l'élément de mesure et le moyen d'exploitation (4, 5) d'une part, et le convertisseur de tension ou de tension de contrôle/force (12, 13) d'autre part sont déclenchés alternativement de façon successive.

9. Dispositif selon l'une des revendications précédentes et la revendication 4,
**caractérisé en ce que**
les moyens d'exploitation (4, 5), l'oscillateur (18) et l'installation d'auto-contrôle (15) sont prévus sur une puce.
